# EUROPEAN PATENT SPECIFICATION

(11) **EP 2 803 549 B1**
(45) Date of publication and mention of the grant of the patent: **03.01.2018**
(21) Application number: 13168152.0
(22) Date of filing: 17.05.2013
(51) Int. Cl.: B60W 30/192, B60W 50/00, B60W 30/184, B60W 20/00, B60W 10/06, B60W 10/30, B60W 30/194, B60K 6/20, F02N 11/08

(54) **Improved driveline temperature control**
Verbesserte Antriebsstrang-Temperaturregelung
Commande de température de transmission améliorée

(43) Date of publication of application: 19.11.2014
(73) Proprietor: Volvo Car Corporation, 40 531 Göteborg (SE)
(72) Inventor: Karrin, Jonas, 47332 Henån (SE); Gylling, Mathias, 41452 Göteborg (SE)
(74) Representative: Volvo Car Corporation

(56) References cited:
- EP-A2- 1 564 403
- DE-A1-102011 116 115
- FR-A1- 2 979 604
- US-A1- 2009 024 264
- US-B1- 6 664 651

## Description

### TECHNICAL FIELD

The present invention relates to temperature control of components in the driveline of a vehicle.

### BACKGROUND

In order for most vehicles to function, the driveline of the vehicle must be within a certain operating temperature range. In case the temperature of a key component in the driveline is too low or too high, adverse effects on vehicle performance and function can be expected. For instance, a combustion engine usually requires a certain temperature of the combustion engine oil to function properly, and the transmission gearbox system of a vehicle often requires a certain minimum temperature of, e.g., the gearbox oil in order to provide satisfactory performance. Also, hydraulic systems such as hydraulic clutches and the like may malfunction in case of too low or too high fluid temperatures.

Certain vehicles, e.g., electric vehicles driven solely by an electric motor or hybrid electric vehicles driven by a combination of an electric motor and a combustion engine, do not generate a sufficient amount of excess heat when operated in electric mode in order for the components of the driveline to acquire and maintain a required temperature in cold environments. This is because the internal heating when operating in electric mode is not enough to overcome the cooling development of the environment on the driveline. Thus, additional heating of components in the driveline is needed. Such heating is often referred to as preconditioning of the driveline.

An example of such preconditioning is to run the combustion engine of a hybrid electric vehicle in order to bring components in the driveline up to a required temperature. Components in the driveline disposed in connection to or close to the combustion engine are usually heated directly by the combustion engine. Other components of the driveline may be indirectly heated by the combustion engine, i.e., heated indirectly by using the combustion engine as a heat source. A common method of controlling such preconditioning is to always run the preconditioning system for a fixed duration of time prior to engaging the electric drive mode of the vehicle, in order to ensure that components of the driveline are at or above the required temperature. EP-A-1 564 403 addresses cooling down problems in a hybrid vehicle. The aim is to optimize periods of engine stopping, in particular by providing an estimation of the time period during which the engine may remained switched off. It considers ambient temperature and actual temperature for predicting a time span until engine coolant temperature has reached a minimal temperature. It also considers battery state of charge. However, it is usually preferred to run an electric vehicle or a hybrid electric vehicle in electric mode for as long as possible without starting auxiliary engines such as a combustion engine, as starting an auxiliary engine adversely affects fuel efficiency. Preconditioning should therefore be kept at a minimum, and unnecessary preconditioning run-time should be avoided.

### SUMMARY

An object of the present invention is to provide a method and a control unit for controlling the temperature of a first component in particular in the driveline of a vehicle, which seeks to mitigate, alleviate, or eliminate one or more of the above-identified deficiencies in the art and disadvantages singly or in any combination and to provide an improved means for control of vehicle driveline components.

This object is obtained by a method for controlling the temperature of a first component a vehicle. The method comprises the step of determining a first reference temperature value representing a cooling development on the temperature of the first component, and also the step of determining a current energy storage level of an energy storage means of the vehicle. The method further comprises the step of calibrating a first preconditioning temperature based on the cooling development represented by the first reference temperature value and also based on the current energy storage level. The first preconditioning temperature after calibration is such that a vehicle having a first component with a temperature higher than the first preconditioning temperature can be operated until depletion of the energy storage means without the temperature of the first component falling below a first pre-defined temperature hardware limit due to said cooling development represented by the first reference temperature value. The method also comprises the step of measuring a current temperature of the first component, and requesting heating of the first component based on whether the current temperature of the first component is below the calibrated first preconditioning temperature.

It is noted that the method for controlling the temperature of a first component in the driveline of a vehicle may be executed in a continuous looped manner, i.e., the comprised steps may be executed serially and repeated indefinitely in a loop or until the repetition sequence is terminated.

The disclosed method, instead of preconditioning the driveline, i.e., requesting heating of the first component, for a fixed duration of time in order to ensure that components, specifically the first component, of the driveline are at or above a required minimum temperature, the disclosed method instead requests preconditioning of the driveline until the current temperature of the driveline reaches the calibrated preconditioning temperature. Hence, since the request for preconditioning is determined based on scenario, i.e., based on the first reference temperature and on the current energy storage level, the total preconditioning time is optimized, which is a benefit of the disclosed method.

Also, the preconditioning time is automatically adapted to how the vehicle is operated since the current temperature of the first component is used by the method. If, e.g., a preconditioning system based on a combustion engine is used, and the combustion engine is run at high load, then the preconditioning time will be reduced in the present method since the current temperature of the first component can be expected to rise faster than if the combustion engine is operated at low load. The preconditioning of the driveline is therefore adjusted according to different driver patterns, which is a benefit of the disclosed method.

Also, by taking the remaining energy of the energy storage means into account the preconditioning time will be reduced when the energy content in the battery is low. The preconditioning run-time is thus optimized based on the current energy content of the energy storage means. This is due to that the re-charging of the energy storage means as a rule also implies heating of the driveline, e.g., when a combustion engine is started when the energy storage means have been depleted in order to re-charge the energy storage means. Thus, if the first component can be expected to be heated within some time-frame as a consequence of re-charging, it is un-necessary to apply pre-conditioning pre-maturely if this is not needed within said time-frame.

It should be noted that some vehicles comprise means for re-charging of the energy source other than a combustion engine. An example being the use of released energy from braking of the vehicle for re-charging a battery. In such cases the depletion time is suitably re-calculated continuously, i.e., updated based on the current status of the energy source and the re-charging state of the vehicle.

According to an aspect of the invention the vehicle is a hybrid electric vehicle, e.g., a vehicle comprising both an electric motor and a combustion engine for propelling the vehicle. In this aspect of the disclosed method a suitable embodiment of the method comprises a driveline precondition software function for heat-up of the first component in the driveline of the hybrid electric vehicle. The method facilitates to run the combustion engine in order for the driveline temperature, i.e., the temperature of at least the first component in the driveline, to be above pre-defined operation limits due to cool down during electric drive of the vehicle.

Due to environmental, fuel efficiency, cost, and/or comfort reasons, it is often preferred by a driver or operator of a hybrid electric vehicle to be able to run the hybrid electric vehicle in electric mode until the combustion engine needs to be started due to low energy in the battery, and not before due to pre-conditioning. The disclosed method supports this preference of the driver in that the goal of at least some aspects of the disclosed method is to offer the driver or operator of a hybrid electric vehicle electric drive as soon as possible, without un-necessary combustion engine run-time within the remaining battery range due to driveline cooling down below acceptable hardware limits.

As an example, consider a driver of a hybrid electric vehicle intending to drive for ten minutes from one place to another. Assume that the battery state is such that the expected time until depletion is 8 minutes, and the engine oil is slightly above the calibrated first preconditioning temperature. In this case preconditioning is not requested in the example vehicle, which only uses the combustion engine for the last two minutes of the journey to propel the vehicle, whereas a vehicle using a traditional preconditioning method will, e.g., precondition for a fixed duration of five minutes after start of the vehicle regardless of outside temperature and depletion time, and then potentially also need to use the combustion engine to propel the vehicle for the last two minutes of the journey. Thus using the combustion engine for a total of 7 minutes compared to two minutes for the example vehicle.

According to an aspect of the invention the first reference temperature value is determined as the measured current temperature of the first component, or as a measured external ambient temperature of the vehicle, whichever is smaller.

The reason for using the minimum of the measured current temperature of the first component and the measured external ambient temperature of the vehicle as first reference temperature is to ensure that a cooling development as accurate as possible is used. For instance, if a vehicle is driven from a garage into a comparably colder environment, then the ambient temperature of the vehicle will be lower than the temperature of the first component and thus decide the cooling development. On the other hand, if the sensor or instrument used for measuring ambient temperature is for instance temporarily situated in direct sun-light, then the ambient temperature reading may be misleading, giving an ambient temperature above that of the first component. In this case the temperature of the first component should be used as first reference temperature since it will better represent the expected cooling development. Thus, both garage starts of the vehicle and sun heat up of ambient temperature sensors are handled by the method.

The object to provide a method and a control unit for controlling the temperature of a first component in particular of a vehicle, which seeks to mitigate, alleviate, or eliminate one or more of the above-identified deficiencies in the art and disadvantages singly or in any combination and to provide an improved means for control of vehicle driveline components is also obtained by means of a control unit for controlling the temperature of a first component in the driveline of a vehicle. The control unit comprises means for determining a first reference temperature value representing a cooling development on the temperature of the first component, and also means for determining a current energy storage level of an energy storage means of the vehicle. The control unit is arranged to calibrate a first preconditioning temperature based on the cooling development represented by the first reference temperature value and also based on the current energy storage level. The first preconditioning temperature after calibration being such that a vehicle having a first component with a temperature higher than the first preconditioning temperature can be operated until depletion of the energy storage means without the temperature of the first component falling below a first pre-defined temperature hardware limit due to said cooling development represented by the first reference temperature value. The control unit further comprises means for measuring a current temperature of the first component. The control unit is adapted to request heating of the first component based on whether the current temperature of the first component is below the calibrated first preconditioning temperature.

### BRIEF DESCRIPTION OF THE DRAWINGS

The present invention will be described in more detail in the following, with reference to the appended drawings, in which
Fig 1 shows a first flowchart of a method of the invention and
Fig 2 shows a second flowchart of a method of the invention and
Fig 3 shows a third flowchart of a method of the invention and
Fig 4 shows a control unit of the invention, and
Fig 5 shows a fourth flowchart of a method of the invention.

### DETAILED DESCRIPTION

Aspects of the present invention will be described more fully hereinafter with reference to the accompanying drawings. The method and apparatus disclosed herein may, however, be embodied in many different forms and should not be construed as being limited to the aspects and embodiments set forth herein. Like numbers in the drawings refer to like elements throughout.

The terminology used herein is for the purpose of describing particular embodiments only, and is not intended to limit the invention.

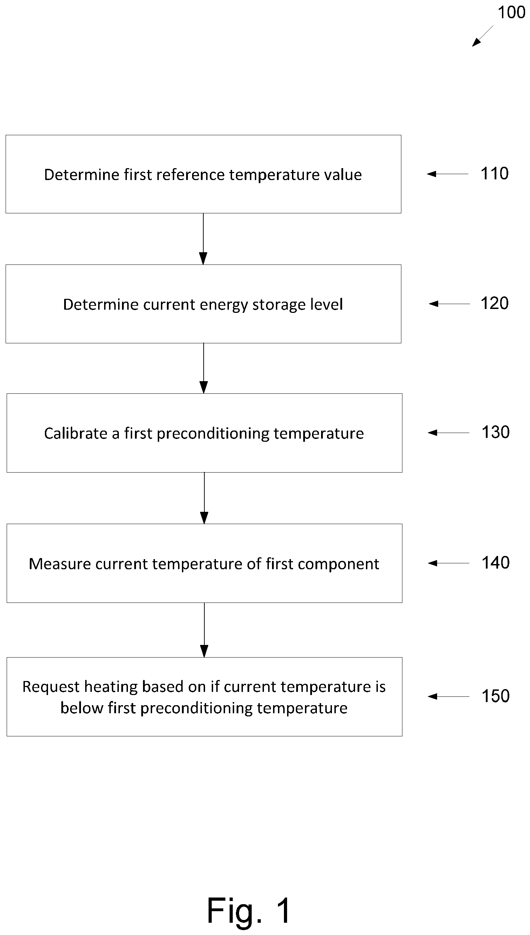

Fig. 1 shows a flowchart of a method 100 for controlling the temperature of a first component in the driveline of a vehicle. The method comprises the step of determining 110 a first reference temperature value representing a cooling development on the temperature of the first component.

Specific examples of how the first reference temperature can be determined are given below. The purpose of the first reference temperature is to gauge or estimate the cooling development or cooling gradient which will act on the first component of the driveline when the vehicle is operated in a certain operating mode, e.g., an electric operating mode. In case the first reference temperature is comparably low, a more rapid cooling development can be expected, while a higher first reference temperature is indicative of a slower or even non-existent cooling development.

The method 100 further comprises the step of determining 120 a current energy storage level of an energy storage means of the vehicle.

The current energy storage level determines the duration of time, or, alternatively, the distance, over which the vehicle can be operated until the energy storage means is depleted and must be re-charged. In some vehicles, the re-charging of the energy storage means also implies re-heating of the driveline, e.g., in case of a hybrid electric vehicle which employs a combustion engine for re-charging of the energy storage means.

The method 100 also comprises the step of calibrating 130 a first preconditioning temperature based on the cooling development represented by the first reference temperature value and also based on the current energy storage level. The first preconditioning temperature after calibration being such that a vehicle having a first component with a temperature higher than the first preconditioning temperature can be operated until depletion of the energy storage means without the temperature of the first component falling below a first pre-defined temperature hardware limit due to said cooling development represented by the first reference temperature value.

The step of calibrating 130 is a key concept of the present disclosure. By such calibration as described above, it is ensured that after pre-conditioning no further re-heating of the first component will be required until the energy storage means is depleted and must be re-charged, at which time re-heating of the driveline can be expected to occur as a side-effect of re-charging the energy storage means. Thus pre-conditioning time is minimized.

The method 100 further comprises the steps of measuring 140 a current temperature of the first component, and requesting 150 heating of the first component based on whether a sum of the current temperature of the first component and a pre-determined margin temperature is below the calibrated first preconditioning temperature.

According to an aspect, the heating of the first component does not ensue immediately, but after a pre-determined time-delay.

According to an aspect, the heating of the first component is not performed until the current temperature of the first component reaches the calibrated first preconditioning temperature. The heating is instead stopped at a pre-determined intermediate temperature level.

According to an aspect, the actual heating of the first component is executed as a function of depletion time and calibrated first preconditioning temperature. Accordingly, if the depletion time is above a pre-determined depletion time threshold, or if the current temperature of the first component is above a safety level threshold, no preconditioning heating is executed even though a request for heating has been made.
The steps of measuring 140 a current temperature of the first component and requesting 150 heating based on said measured current temperature of the first component implies that the method 100 will adapt the pre-conditioning time to, e.g., the driver behavior. This is because the disclosed method 100 is based on temperature as opposed to being based on a fixed pre-conditioning time. In case of high engine loads in a hybrid electric vehicle using a combustion engine for preconditioning of the driveline, the current temperature of the driveline will increase more rapidly and thus the pre-conditioning time will be lower compared to a scenario where the engine is run at a comparably lower load. Thus the method adjusts the pre-conditioning time to the behavior of the driver, and to the driving scenario.

According to an aspect of the invention the vehicle is a hybrid electric vehicle.

According to another aspect of the invention the first component is one out of a combustion engine oil of the vehicle and a driveline gearbox oil of the vehicle. Most combustion engine oils and gearbox oils are associated with minimum and maximum operating temperatures. The first pre-defined temperature hardware limit mentioned above is thus preferably pre-defined according to such minimum temperature requirements. In addition, heating requests are suitably not generated by the method if the current temperature of the first component is in danger of surpassing a maximum operating temperature of said first component.
As an example of the pre-defined temperature hardware limit mentioned above, consider an engine oil, which, if not above a certain pre-defined temperature may cause high friction in the engine. As another example of a pre-defined temperature hardware limit, consider a gearbox oil which, if not above a certain pre-defined temperature may cause failure to engage a clutch.
In case of high oil temperatures, cooling as opposed to heating to reduce the risk for oil degradation is suitable.

According to an aspect of the invention the first reference temperature value is determined as the measured current temperature of the first component, or as a measured external ambient temperature of the vehicle, whichever is smaller. The first reference temperature is thus associated with the temperature of the environment surrounding the first component and the vehicle itself and can be expected to be representative of the cooling development or cooling gradient affecting the first component as the vehicle is operated. The first reference temperature is thus related to the expected cooling development which will alter the temperature of the first component during operation of the vehicle in scenarios where the first component is not in some way heated by external means, e.g., heated by means of a combustion engine comprised in the vehicle. In case of a cold weather driving scenario the first component can be expected to undergo more rapid cooling compared to scenarios with warmer weather.
As mentioned above, the reason for using the minimum of the measured current temperature of the first component and the measured external ambient temperature of the vehicle as first reference temperature is to ensure that a correct expected cooling development is used. For instance, if a vehicle is driven from a garage into a comparably colder environment, then the ambient temperature of the vehicle will be lower than the temperature of the first component and thus decide the cooling development. On the other hand, if the sensor measuring ambient temperature is for instance situated in direct sun-light, then the ambient temperature reading may be misleading and give an ambient temperature above that of the first component. In this case the temperature of the first component should be used as first reference temperature since it will better represent the expected cooling development.

According to an aspect of the invention said energy storage means comprises an electric battery pack for storing electrical energy, and the current energy storage level corresponds to the electrical energy currently stored by the energy storage means. Other energy storage means can be used as alternative energy storage means. Examples include means for storing mechanical energy, e.g., a spring or compressed air system. Combinations of electrical and mechanical energy storage means can also be used.

According to an aspect of the invention the step of Calibrating 130 further comprises determining the first preconditioning temperature by means of a pre-determined numerical look-up table of preconditioning temperatures, the numerical look-up table being adapted to be indexed by the first reference temperature value and the current energy storage level. Alternatively, the determining of the first preconditioning temperature may be facilitated by means of a pre-determined function derived from experimentation with different scenarios, temperatures, and hardware. Such pre-determined look-up tables and functions can be constructed by experimentation using vehicles in various ambient temperatures, or by means of physical models of cooling based on material and other properties of the first component.

According to an aspect of the invention the step of Calibrating 130 further comprises the first preconditioning temperature being such that a hybrid electrical vehicle having a first component with a current temperature higher than the first preconditioning temperature can be driven in electric mode at a first reference velocity until depletion of the energy storage means, without the temperature of the first component falling below a first pre-defined temperature hardware limit due to said cooling development.
As an example, said first reference velocity can be around 75 km/h. However, the velocity 75 km/h is to be construed as an example applicable to a specific vehicle only. Thus, the first reference velocity needs to be calibrated to a suitable value based on the vehicle used.

According to an aspect of the invention the heating of the first component is facilitated by means of a combustion engine comprised in the hybrid electrical vehicle. The combustion engine can in some vehicles be equipped with a generator adapted to generate energy which can be used to replenish the energy storage means of the vehicle. Thus, when using the combustion engine to re-charge the energy storage means, it can be expected that also the temperature of the driveline will increase due to the excess heat generated by the combustion engine.

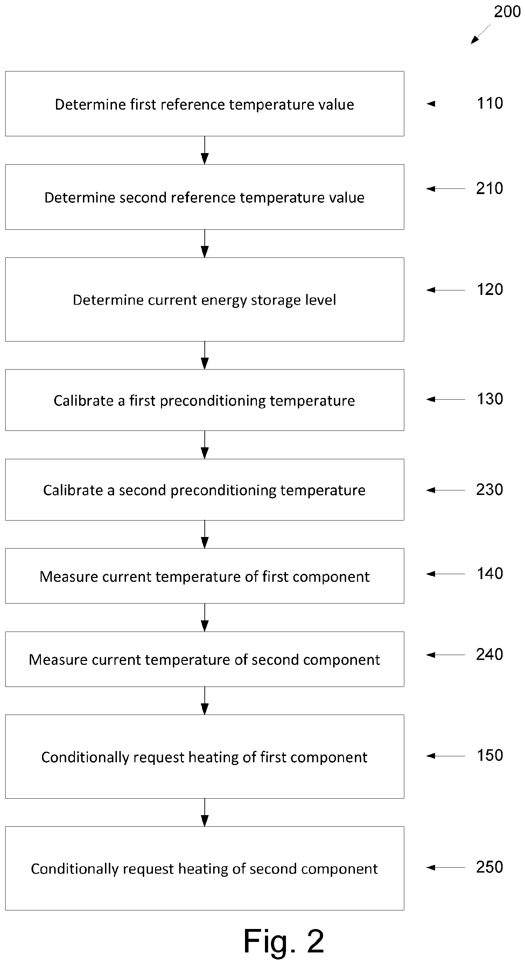

Fig. 2 shows a second flowchart representing a method 200 of the invention in which the method 200 is also adapted for controlling the temperature of a second component in the driveline of the vehicle. The method 200 comprises the steps of determining 210 a second reference temperature value representing a cooling development on the temperature of the second component, and calibrating 230 a second preconditioning temperature based on the cooling development represented by the second reference temperature value and also based on the current energy storage level, the second preconditioning temperature after calibration being such that a vehicle having a second component with a temperature higher than the second preconditioning temperature can be operated until depletion of the energy storage means without the temperature of the second component falling below a second pre-defined temperature hardware limit due to said cooling development represented by the second reference temperature value.

The method 200 further comprises the steps of measuring 240 a current temperature of the second component, and requesting 250 heating of the second component based on whether the current temperature of the second component is below the calibrated second preconditioning temperature.

According to an aspect of the invention the first component is a combustion engine oil of the vehicle and the second component is a driveline gearbox oil of the vehicle.

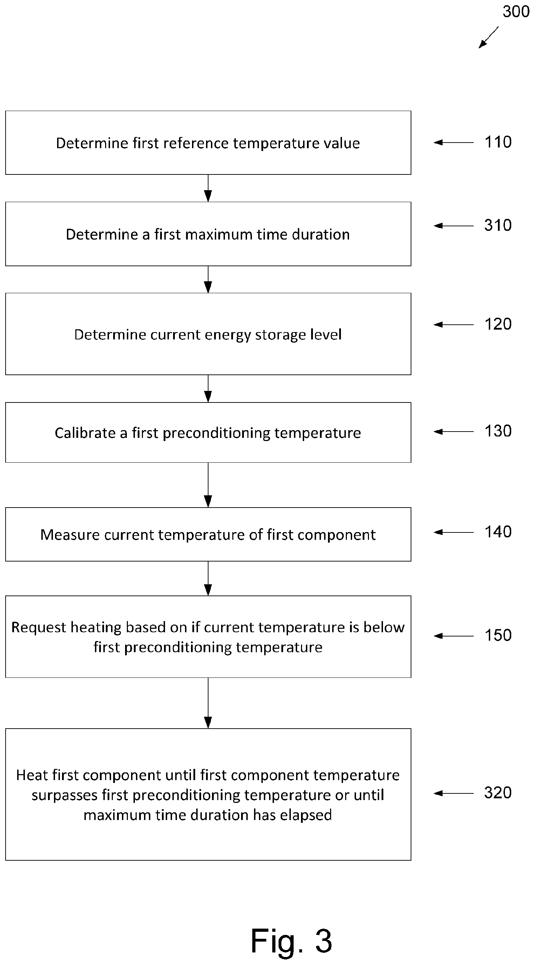

Fig. 3 shows a third flowchart representing a method 300 of the invention in which the method 300 further comprises the step of determining 310 a first maximum heating duration of time, and heating 320 the first component of the vehicle following a request of the method 300 for heating of said first component, until the temperature of the first component surpasses the first preconditioning temperature or until the first maximum heating duration of time has elapsed, whichever is first to occur.

According to an aspect of the invention the first maximum heating duration of time is determined based on the first reference temperature value.

According to an aspect of the invention the first component comprises a catalyst unit. It should be noted that the present disclosure mentions driveline components such as gearbox oils and combustion engine oils in need of preconditioning. However, this should not be construed as limiting the method to these types of driveline components. In fact, the disclosed temperature control method could be applied to controlling the temperature of any component of a vehicle in need of a given operating temperature range in order to function as intended.
The disclosed method can naturally be extended to any number of components in a vehicle, i.e., beyond the above-mentioned first and second components, and also need not be limited to components of the driveline of a vehicle.

Thus, according to an aspect, the present method is applied to a plurality of components in a vehicle. For each such component, or for each sub-set of such components, the method comprises the steps of determining a reference temperature value representing a cooling development on the temperature of said component or components, and calibrating a preconditioning temperature based on the cooling development represented by said reference temperature value and also based on the current energy storage level, the preconditioning temperature after calibration being such that a vehicle having said component or components with temperature or temperatures higher than the preconditioning temperature can be operated until depletion of the energy storage means without the temperature of the said component or components falling below a pre-defined temperature hardware limit due to said cooling development represented by said reference temperature value.

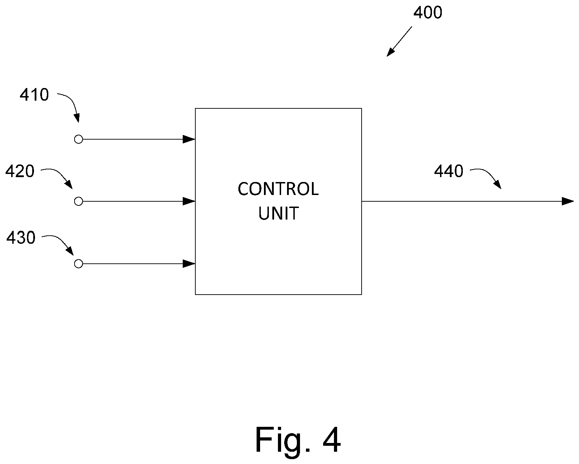

The method further comprises the steps of measuring a current temperature of said component or components, and requesting heating of said component or components based on whether the current temperature of said component or components is below said calibrated preconditioning temperature. Examples of components and systems in a vehicle other than the gearbox oil, engine oil, and catalyst unit, which could benefit from the disclosed preconditioning method include:
- Heat storage devices, for example a thermos with heated engine coolant.
- Fluids other than an engine or gearbox oil, e.g.,
   ∘ a fuel and a fuel system with preconditioning to prevent wax paraffination,
   ∘ an engine coolant with preconditioning to enhance start performance or emissions or fuel consumption,
   ∘ an adblue container.
- Electric driveline components, with preconditioning to heat the oil in an electric rear axle drive to be able to engage a clutch for electric propulsion in cold climates.
- Heating or cooling of electric batteries with preconditioning to control the temperature of the battery.
- Exhaust aftertreatment systems, for example
   ∘ Oxidation catalysts
   ∘ Lean NOx traps
   ∘ Diesel particle filters
   ∘ Selective catalytic reduction systems
Preconditioning of some of the components above could also be beneficial when measuring emissions with a portable emission measurement system (PEMS) and limited emissions are demanded at restart of the combustion engine in a hybrid car. Fig 4 shows a control unit 400 for controlling the temperature of a first component in the driveline of a vehicle. The control unit 400 comprises means 410 for determining a first reference temperature value representing a cooling development on the temperature of the first component, and also means 420 for determining a current energy storage level of an energy storage means of the vehicle. The control unit 400 is arranged to calibrate a first preconditioning temperature based on the cooling development represented by the first reference temperature value and also based on the current energy storage level. The first preconditioning temperature after calibration being such that a vehicle having a first component with a temperature higher than the first preconditioning temperature can be operated until depletion of the energy storage means without the temperature of the first component falling below a first pre-defined temperature hardware limit due to said cooling development represented by the first reference temperature value. The control unit 400 further comprises means 430 for measuring a current temperature of the first component. The control unit 400 is adapted to request heating of the first component by means of a heating request output signal 440. The heating request signal 440 is based on whether the current temperature of the first component is below the calibrated first preconditioning temperature or not.

According to an aspect of the invention the means 410 for determining a first reference temperature value comprises means for measuring a current temperature of the first component, as well as means for measuring an external ambient temperature of the vehicle, and wherein the first reference temperature is determined by selecting the smaller out of a measured current temperature of the first component and a measured external ambient temperature of the vehicle.

According to an aspect of the invention the energy storage means comprises an electric battery pack for storing electrical energy, and the current energy storage level corresponds to the electrical energy currently stored by the energy storage means.

According to an aspect of the invention calibrating the first preconditioning temperature based on the cooling development represented by the first reference temperature value and also based on the current energy storage level comprises determining the calibrated first preconditioning temperature by means of a numerical look-up table of preconditioning temperatures, the numerical look-up table being adapted to be indexed by the first reference temperature value and the current energy storage level.

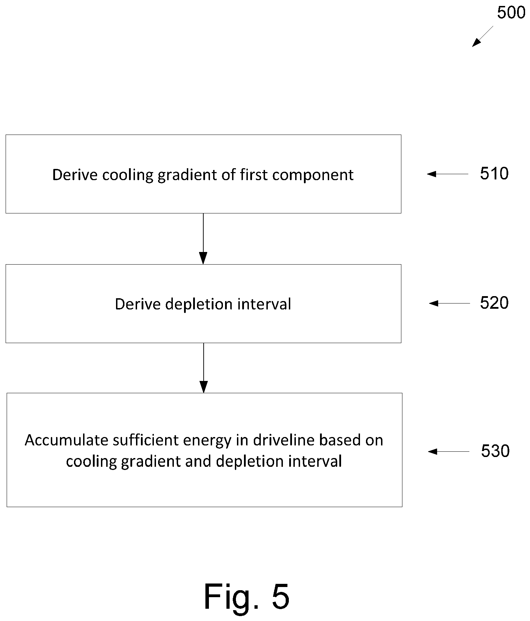

Fig. 5 shows a flowchart representing a method 500 for the preconditioning of a first component in the driveline of a hybrid vehicle, the method 500 comprising the steps of deriving 510 an expected cooling gradient of the first component, and also deriving 520 a depletion interval of an energy source of the vehicle, as well as the step of accumulating 530 an amount of energy in the first component sufficient to keep the energy level of the first component above a pre-defined lower threshold during the entire depletion interval.
Fig. 5 serves to illuminate that the core of the present disclosure lies in the accumulation of energy, i.e., the increasing of temperature, in the driveline of a vehicle in a sufficient but not excessive quantity, such that given an expected energy drainage, i.e., a cooling, which is determined by measurement of ambient temperature, the energy stored in the driveline will stay above a lower limit during a depletion interval of an energy storage means of the vehicle. The method of Fig. 5 is suitably applied for preconditioning of the driveline in a hybrid vehicle comprising a combustion engine and a second source of energy for alternating modes for driving the vehicle. An aspect of the above is then a method 500 for preconditioning a first component in a drive line of a hybrid vehicle comprising a combustion engine and a second source of energy for alternating modes for driving the vehicle, the first component having an operating temperature between a lower pre-determined threshold value and an upper pre-determined threshold value, wherein the preconditioning of the first component comprises the step of heating the first component by activating the combustion engine. The method 500 is characterised in that the lower of a vehicle ambient temperature or the actual temperature of the first component is used to derive a cooling gradient of the first component when the vehicle is operated in a mode where the combustion engine is off, wherein a depletion time of the second source of energy is derived from a current status of energy left in the second source of energy, wherein the combustion engine is turned on if the current temperature of the first component should fall below the lower threshold value before the depletion time is out and the combustion engine would be kept running until the temperature of the first component reaches a value that represents an optimum temperature with respect to the cooling gradient and the depletion time such that the vehicle can be driven by the second source of energy during the remaining part of the depletion time; or the combustion engine would be kept running until the temperature of the first component reaches the upper threshold value such that the vehicle can be driven by the second source of energy during the time period decided by the time it takes for the first component to cool down to the lower threshold value, which cooling time is derived from the upper threshold value, the cooling gradient and the lower threshold value.
The first component mentioned in connection to Fig. 5 can as mentioned above in different aspects of the method be a fluid such as engine oil or gearbox oil, or some other driveline component with a pre-determined operating temperature, e.g., a catalyst unit.
According to an aspect of the method 500, the combustion engine is turned on if the depletion time should run out before the current temperature of the first fluid should fall below the lower threshold value.
It should be noted that the disclosure up to here has been focused on the heating of components in a driveline, i.e., preconditioning has until now been primarily heating of driveline components. However, an aspect of the present disclosure which does not belong to the claimed invention also encompasses the cooling of components in a driveline. Thus, in a scenario where components in the driveline tend to reach too high temperatures when the vehicle is operated in a given mode, e.g., an electric mode, preconditioning may be required which cool instead of heats specific components in the driveline.

Aspects of the invention are described with reference to the drawings, such as block diagrams and/or flowcharts. It is understood that several blocks of the block diagrams and/or flowchart illustrations, and combinations of blocks in the block diagrams and/or flowchart illustrations, can be implemented by computer program instructions. Such computer program instructions may be provided to a processor of a general purpose computer, a special purpose computer and/or other programmable data processing apparatus to produce a machine, such that the instructions, which execute via the processor of the computer and/or other programmable data processing apparatus, create means for implementing the functions/acts specified in the block diagrams and/or flowchart block or blocks.
These computer program instructions may also be stored in a computer-readable memory that can direct a computer or other programmable data processing apparatus to function in a particular manner, such that the instructions stored in the computer-readable memory produce an article of manufacture including instructions which implement the function/act specified in the block diagrams and/or flowchart block or blocks.
The computer program instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions/acts specified in the block diagrams and/or flowchart block or blocks..
In some implementations, the functions or steps noted in the blocks may occur out of the order noted in the operational illustrations. For example, two blocks shown in succession may in fact be executed substantially concurrently or the blocks may sometimes be executed in the reverse order, depending upon the functionality/acts involved.
In the drawings and specification, there have been disclosed exemplary aspects of the invention. However, many variations and modifications can be made to these aspects without substantially departing from the principles of the present invention. Accordingly, although specific terms are employed, they are used in a generic and descriptive sense only and not for purposes of limitation.

The invention is not limited to the examples of aspects described above and shown in the drawings, but may be freely varied within the scope of the appended claims.

## Claims

1. A method (100) for controlling the temperature of a first component of a hybrid electric vehicle, the method (100) comprising the steps of;
• Determining (110) a first reference temperature value representing a cooling development on the temperature of the first component,
• Determining (120) a current energy storage level of an energy storage means of the hybrid electric vehicle,
• Calibrating (130) a first preconditioning temperature based on the cooling development represented by the first reference temperature value and also based on the current energy storage level, the first preconditioning temperature after calibration being such that a hybrid electric vehicle having a first component with a temperature higher than the first preconditioning temperature can be operated until depletion of the energy storage means without the temperature of the first component falling below a first pre-defined temperature hardware limit due to said cooling development represented by the first reference temperature value,
• Measuring (140) a current temperature of the first component,
Requesting (150) heating of the first component based on whether a sum of the current temperature of the first component and a pre-determined margin temperature is below the calibrated first preconditioning temperature, wherein the heating of the first component is facilitated by means of a combustion engine comprised in the hybrid electric vehicle.

2. The method (100) of claim 1, wherein the first reference temperature value is determined as the measured current temperature of the first component, or as a measured external ambient temperature of the hybrid electric vehicle, whichever is smaller.

3. The method (100) of any one of claims 1-2, wherein said energy storage means comprises an electric battery pack for storing electrical energy, and wherein said current energy storage level corresponds to the electrical energy currently stored by the energy storage means.

4. The method (100) of any one of claims 1-3, wherein the step of Calibrating (130) further comprises the first preconditioning temperature being such that a hybrid electric vehicle having a first component with a current temperature higher than the first preconditioning temperature can be driven in electric mode at a first reference velocity until depletion of the energy storage means, without the temperature of the first component falling below a first pre-defined temperature hardware limit due to said cooling development.

5. The method (200) of any one of claims 1-4, extended for also controlling the temperature of a second component of the hybrid electric vehicle, the method (200) comprising the steps of;
• Determining (210) a second reference temperature value representing a cooling development on the temperature of the second component,
• Calibrating (230) a second preconditioning temperature based on the cooling development represented by the second reference temperature value and also based on the current energy storage level, the second preconditioning temperature after calibration being such that a hybrid electric vehicle having a second component with a temperature higher than the second preconditioning temperature can be operated until depletion of the energy storage means without the temperature of the second component falling below a second pre-defined temperature hardware limit due to said cooling development represented by the second reference temperature value,
• Measuring (240) a current temperature of the second component,
• Requesting (250) heating of the second component based on whether the current temperature of the second component is below the calibrated second preconditioning temperature.

6. The method (200) of claim 5, wherein the first component is a combustion engine oil of the hybrid electric vehicle and the second component is a gearbox oil of the hybrid electric vehicle.

7. The method (300) of any one of claims 1-6, further comprising the steps of;
• Determining (310) a first maximum heating duration of time,
• Heating (320) the first component of the hybrid electric vehicle following a request (150) of the method (300) for heating of said first component, until the temperature of the first component surpasses the first preconditioning temperature or until the first maximum heating duration of time has elapsed, whichever is first to occur.

8. The method (300) of claim 7, wherein the first maximum heating duration of time is determined based on the first reference temperature value.

9. The method (100) of claim 1 further comprising the steps of;
• Determining a third reference temperature value representing a heating effect on the temperature a third component of the hybrid electric vehicle,
• Calibrating a third preconditioning temperature based on the heating effect represented by the third reference temperature value and also based on the current energy storage level, the third preconditioning temperature after calibration being such that a hybrid electric vehicle having a third component with a temperature lower than the first preconditioning temperature can be operated until depletion of the energy storage means without the temperature of the first component rising above a third pre-defined temperature hardware limit due to said heating effect represented by the third reference temperature value,
• Measuring a current temperature of the third component,
• Requesting cooling of the third component based on whether the current temperature of the third component is above the calibrated third preconditioning temperature.

10. A control unit (400) for controlling the temperature of a first component of a vehicle, the control unit (400) comprising means (410) for determining a first reference temperature value representing a cooling development on the temperature of the first component, and also means (420) for determining a current energy storage level of an energy storage means of the vehicle, the control unit (400) being arranged to calibrate a first preconditioning temperature based on the cooling development represented by the first reference temperature value and also based on the current energy storage level, **characterized in that** the first preconditioning temperature after calibration being such that a vehicle having a first component with a temperature higher than the first preconditioning temperature can be operated until depletion of the energy storage means without the temperature of the first component falling below a first pre-defined temperature hardware limit due to said cooling development represented by the first reference temperature value, the control unit (400) further comprising means (440) for measuring a current temperature of the first component, the control unit (400) being adapted to request heating of the first component based on whether the current temperature of the first component is below the calibrated first preconditioning temperature.

11. The control unit (400) of claim 10, wherein the vehicle is a hybrid electric vehicle.

12. The control unit (400) of any one of claims 10-11, wherein the first component is one out of a combustion engine oil of the vehicle and a gearbox oil of the vehicle.

13. The control unit (400) of any one of claims 10-12, wherein the means (410) for determining a first reference temperature value comprises means for measuring a current temperature of the first component, as well as means for measuring an external ambient temperature of the vehicle, and wherein the first reference temperature is determined by selecting the smaller out of a measured current temperature of the first component and a measured external ambient temperature of the vehicle.

14. The control unit (400) of any one of claims 10-13, wherein said energy storage means comprises an electric battery pack for storing electrical energy, and wherein said current energy storage level corresponds to the electrical energy currently stored by the energy storage means.

15. The control unit (400) of any one of claims 10-14, wherein calibrating the first preconditioning temperature based on the cooling development represented by the first reference temperature value and also based on the current energy storage level comprises determining the calibrated first preconditioning temperature by means of a numerical look-up table of preconditioning temperatures, the numerical look-up table being adapted to be indexed by the first reference temperature value and the current energy storage level.

## Patentansprüche

1. Verfahren (100) zur Steuerung der Temperatur einer ersten Komponente eines Hybridelektrofahrzeugs, das Verfahren (100) umfassend die Schritte des:
• Ermittelns (110) eines ersten Referenztemperaturwerts, der eine Kühlentwicklung auf der Temperatur der ersten Komponente darstellt,
• Ermittelns (120) eines aktuellen Energiespeicherstands eines Energiespeichermittels des Hybridelektrofahrzeugs,
• Kalibrierens (130) einer ersten Vorkonditionierungstemperatur anhand der Kühlentwicklung, die von dem ersten Referenztemperaturwert dargestellt wird, und auch anhand des aktuellen Energiespeicherstands, wobei die erste Vorkonditionierungstemperatur nach der Kalibrierung derart ist, dass ein Hybridelektrofahrzeug, das eine erste Komponente mit einer Temperatur, die höher als die erste Vorkonditionierungstemperatur ist, aufweist, bis zur Erschöpfung des Energiespeichermittels betrieben werden kann, ohne dass die Temperatur der ersten Komponente aufgrund der Kühlentwicklung, die von dem ersten Referenztemperaturwert dargestellt wird, unter eine erste vordefinierte Temperatur-Hardwaregrenze fällt,
• Messens (140) einer aktuellen Temperatur der ersten Komponente,
• Anforderns (150) einer Erhitzung der ersten Komponente in Abhängigkeit davon, ob eine Summe der aktuellen Temperatur der ersten Komponente und einer vorbestimmten Randtemperatur unter der kalibrierten ersten Vorkonditionierungstemperatur liegt, wobei die Erhitzung der ersten Komponente mittels eines Verbrennungsmotors erleichtert wird, der in dem Hybridelektrofahrzeug enthalten ist.

2. Verfahren (100) nach Anspruch 1, wobei der erste Referenztemperaturwert als die gemessene aktuelle Temperatur der ersten Komponente oder als eine gemessene äußere Umgebungstemperatur des Hybridelektrofahrzeugs ermittelt wird, je nachdem, welche niedriger ist.

3. Verfahren (100) nach einem der Ansprüche 1 bis 2, wobei das Energiespeichermittel ein elektrisches Batteriepaket zum Speichern elektrischer Energie umfasst, und wobei der aktuelle Energiespeicherstand der elektrischen Energie entspricht, die aktuell von dem Energiespeichermittel gespeichert ist.

4. Verfahren (100) nach einem der Ansprüche 1 bis 3, wobei der Schritt des Kalibrierens (130) ferner umfasst, dass die erste Vorkonditionierungstemperatur derart ist, dass ein Hybridelektrofahrzeug, das eine erste Komponente mit einer aktuellen Temperatur aufweist, die höher als die erste Vorkonditionierungstemperatur ist, im elektrischen Modus bei einer ersten Referenzgeschwindigkeit bis zur Erschöpfung des Energiespeichermittels gefahren werden kann, ohne dass die Temperatur der ersten Komponente aufgrund der Kühlentwicklung unter eine erste vordefinierte Temperatur-Hardwaregrenze fällt.

5. Verfahren (200) nach einem der Ansprüche 1 bis 4, das erweitert ist, um ebenfalls die Temperatur einer zweiten Komponente des Hybridelektrofahrzeugs zu steuern, das Verfahren (200) umfassend die Schritte des:
• Ermittelns (210) eines zweiten Referenztemperaturwerts, der eine Kühlentwicklung auf der Temperatur der zweiten Komponente darstellt,
• Kalibrierens (230) einer zweiten Vorkonditionierungstemperatur anhand der Kühlentwicklung, die von dem zweiten Referenztemperaturwert dargestellt wird, und auch anhand des aktuellen Energiespeicherstands, wobei die zweite Vorkonditionierungstemperatur nach der Kalibrierung derart ist, dass ein Hybridelektrofahrzeug, das eine zweite Komponente mit einer Temperatur, die höher als die zweite Vorkonditionierungstemperatur ist, aufweist, bis zur Erschöpfung des Energiespeichermittels betrieben werden kann, ohne dass die Temperatur der zweiten Komponente aufgrund der Kühlentwicklung, die von dem zweiten Referenztemperaturwert dargestellt wird, unter eine zweite vordefinierte Temperatur-Hardwaregrenze fällt,
• Messens (240) einer aktuellen Temperatur der zweiten Komponente,
• Anforderns (250) einer Erhitzung der zweiten Komponente in Abhängigkeit davon, ob die aktuelle Temperatur der zweiten Komponente unter der kalibrierten zweiten Vorkonditionierungstemperatur liegt.

6. Verfahren (200) nach Anspruch 5, wobei die erste Komponente ein Verbrennungsmotoröl des Hybridelektrofahrzeugs und die zweite Komponente ein Getriebeöl des Hybridelektrofahrzeugs ist.

7. Verfahren (300) nach einem der Ansprüche 1 bis 6, ferner umfassend die Schritte des:
• Ermittelns (310) einer ersten maximalen Erhitzungszeitdauer,
• Erhitzens (320) der ersten Komponente des Hybridelektrofahrzeugs nach einer Anforderung (150) des Verfahrens (300) zum Erhitzen der ersten Komponente, bis die Temperatur der ersten Komponente die erste Vorkonditionierungstemperatur übersteigt oder bis die erste maximale Erhitzungszeitdauer verstrichen ist, je nachdem, was zuerst eintritt.

8. Verfahren (300) nach Anspruch 7, wobei die erste maximale Erhitzungszeitdauer anhand des ersten Referenztemperaturwerts ermittelt wird.

9. Verfahren (100) nach Anspruch 1, ferner umfassend die Schritte des:
• Ermittelns eines dritten Referenztemperaturwerts, der eine Erhitzungswirkung auf die Temperatur einer dritten Komponente des Hybridelektrofahrzeugs darstellt,
• Kalibrierens einer dritten Vorkonditionierungstemperatur anhand der Erhitzungswirkung, die von dem dritten Referenztemperaturwert dargestellt wird, und auch anhand des aktuellen Energiespeicherstands, wobei die dritte Vorkonditionierungstemperatur nach der Kalibrierung derart ist, dass ein Hybridelektrofahrzeug, das eine dritte Komponente mit einer Temperatur, die niedriger als die erste Vorkonditionierungstemperatur ist, aufweist, bis zur Erschöpfung des Energiespeichermittels betrieben werden kann, ohne dass die Temperatur der ersten Komponente aufgrund der Erhitzungswirkung, die von dem dritten Referenztemperaturwert dargestellt wird, über eine dritte vordefinierte Temperatur-Hardwaregrenze steigt,
• Messens einer aktuellen Temperatur der dritten Komponente,
• Anforderns einer Kühlung der dritten Komponente in Abhängigkeit davon, ob die aktuelle Temperatur der dritten Komponente über der kalibrierten dritten Vorkonditionierungstemperatur liegt.

10. Steuereinheit (400) zum Steuern der Temperatur einer ersten Komponente eines Fahrzeugs, die Steuereinheit (400) umfassend Mittel (410) zum Ermitteln eines ersten Referenztemperaturwerts, der eine Kühlentwicklung auf der Temperatur der ersten Komponente darstellt, und auch Mittel (420) zum Ermitteln eines aktuellen Energiespeicherstands eines Energiespeichermittels des Fahrzeugs, wobei die Steuereinheit (400) angeordnet ist, eine erste Vorkonditionierungstemperatur anhand der Kühlentwicklung, die von dem ersten Referenztemperaturwert dargestellt wird, und auch anhand des aktuellen Energiespeicherstands zu kalibrieren, **dadurch gekennzeichnet, dass** die erste Vorkonditionierungstemperatur nach der Kalibrierung derart ist, dass ein Fahrzeug, das eine erste Komponente mit einer Temperatur, die höher als die erste Vorkonditionierungstemperatur ist, aufweist, bis zur Erschöpfung des Energiespeichermittels betrieben werden kann, ohne dass die Temperatur der ersten Komponente aufgrund der Kühlentwicklung, die von dem ersten Referenztemperaturwert dargestellt wird, unter eine erste vordefinierte Temperatur-Hardwaregrenze fällt, die Steuereinheit (400) ferner umfassend Mittel (440) zum Messen einer aktuellen Temperatur der ersten Komponente, wobei die Steuereinheit (400) angepasst ist, eine Erhitzung der ersten Komponente in Abhängigkeit davon anzufordern, ob die aktuelle Temperatur der ersten Komponente unter der kalibrierten ersten Vorkonditionierungstemperatur liegt.

11. Steuereinheit (400) nach Anspruch 10, wobei das Fahrzeug ein Hybridelektrofahrzeug ist.

12. Steuereinheit (400) nach einem der Ansprüche 10 bis 11, wobei die erste Komponente eines von einem Verbrennungsmotoröl des Fahrzeugs und einem Getriebeöl des Fahrzeugs ist.

13. Steuereinheit (400) nach einem der Ansprüche 10 bis 12, wobei das Mittel (410) zum Ermitteln eines ersten Referenztemperaturwerts Mittel zum Messen einer aktuellen Temperatur der ersten Komponente sowie Mittel zum Messen einer äußeren Umgebungstemperatur des Fahrzeugs umfasst, und wobei die erste Referenztemperatur ermittelt wird, indem die niedrigere von einer gemessenen aktuellen Temperatur der ersten Komponente und einer gemessenen äußeren Umgebungstemperatur des Fahrzeugs ausgewählt wird.

14. Steuereinheit (400) nach einem der Ansprüche 10 bis 13, wobei das Energiespeichermittel ein elektrisches Batteriepaket zum Speichern elektrischer Energie umfasst, und wobei der aktuelle Energiespeicherstand der elektrischen Energie entspricht, die aktuell von dem Energiespeichermittel gespeichert ist.

15. Steuereinheit (400) nach einem der Ansprüche 10 bis 14, wobei das Kalibrieren der ersten Vorkonditionierungstemperatur anhand der Kühlentwicklung, die von dem ersten Referenztemperaturwert dargestellt wird, und auch anhand des aktuellen Energiespeicherstands Ermitteln der kalibrierten ersten Vorkonditionierungstemperatur mittels einer numerischen Nachschlagetabelle von Vorkonditionierungstemperaturen umfasst, wobei die numerische Nachschlagetabelle angepasst ist, durch den ersten Referenztemperaturwert und den aktuellen Energiespeicherstand indexiert zu werden.

## Revendications

1. Procédé (100) de régulation de la température d'un premier composant d'un véhicule électrique hybride, le procédé (100) comportant les étapes consistant à _{:}
• Déterminer (110) une première valeur de température de référence représentant un développement de refroidissement sur la température du premier composant,
• Déterminer (120) un niveau actuel de stockage d'énergie d'un moyen de stockage d'énergie du véhicule électrique hybride,
• Étalonner (130) une première température de préconditionnement en se basant sur le développement de refroidissement représenté par la première valeur de température de référence et en se basant également sur le niveau actuel de stockage d'énergie, la première température de préconditionnement après étalonnage étant telle qu'un véhicule électrique hybride comprenant un premier composant présentant une température supérieure à la première température de préconditionnement puisse être exploité jusqu'à épuisement du moyen de stockage d'énergie sans que la température du premier composant tombe au-dessous d'une première limite matérielle prédéfinie de température du fait dudit développement de refroidissement représenté par la première valeur de température de référence,
• Mesurer (140) une température actuelle du premier composant,
• Demander (150) un chauffage du premier composant suivant qu'une somme de la température actuelle du premier composant et d'une température de marge prédéterminée est inférieure à la première température de préconditionnement étalonnée, le chauffage du premier composant étant facilité au moyen d'un moteur à combustion compris dans le véhicule électrique hybride.

2. Procédé (100) selon la revendication 1, la première valeur de température de référence étant déterminée comme la température actuelle mesurée du premier composant, ou comme une température ambiante externe mesurée du véhicule électrique hybride, la plus petite valeur étant retenue.

3. Procédé (100) selon l'une quelconque des revendications 1 à 2, ledit moyen de stockage d'énergie comportant un bloc de batteries électriques servant à stocker de l'énergie électrique, et ledit niveau actuel de stockage d'énergie correspondant à l'énergie électrique actuellement stockée par le moyen de stockage d'énergie.

4. Procédé (100) selon l'une quelconque des revendications 1 à 3, l'étape d'étalonnage (130) étant en outre **caractérisée en ce que** la première température de préconditionnement est telle qu'un véhicule électrique hybride comprenant un premier composant présentant une température actuelle supérieure à la première température de préconditionnement puisse être conduit en mode électrique à une première vitesse de référence jusqu'à épuisement du moyen de stockage d'énergie, sans que la température du premier composant tombe au-dessous d'une première limite matérielle prédéfinie de température du fait dudit développement de refroidissement.

5. Procédé (200) selon l'une quelconque des revendications 1 à 4, étendu pour réguler également la température d'un deuxième composant du véhicule électrique hybride, le procédé (200) comportant les étapes consistant à _{:}
• Déterminer (210) une deuxième valeur de température de référence représentant un développement de refroidissement sur la température du deuxième composant,
• Étalonner (230) une deuxième température de préconditionnement en se basant sur le développement de refroidissement représenté par la deuxième valeur de température de référence et en se basant également sur le niveau actuel de stockage d'énergie, la deuxième température de préconditionnement après étalonnage étant telle qu'un véhicule électrique hybride comprenant un deuxième composant présentant une température supérieure à la deuxième température de préconditionnement puisse être exploité jusqu'à épuisement du moyen de stockage d'énergie sans que la température du deuxième composant tombe au-dessous d'une deuxième limite matérielle prédéfinie de température du fait dudit développement de refroidissement représenté par la deuxième valeur de température de référence,
• Mesurer (240) une température actuelle du deuxième composant,
• Demander (250) un chauffage du deuxième composant suivant que la température actuelle du deuxième composant est inférieure à la deuxième température de préconditionnement étalonnée.

6. Procédé (200) selon la revendication 5, le premier composant étant une huile de moteur à combustion du véhicule électrique hybride et le deuxième composant étant une huile de boîte de vitesses du véhicule électrique hybride.

7. Procédé (300) selon l'une quelconque des revendications 1 à 6, comportant en outre les étapes consistant à _{:}
• Déterminer (310) une première durée maximale de chauffage,
• Chauffer (320) le premier composant du véhicule électrique hybride suite à une demande (150) du procédé (300) pour le chauffage dudit premier composant, jusqu'à ce que la température du premier composant dépasse la première température de préconditionnement ou jusqu'à ce que la première durée maximale de chauffage se soit écoulée, dès la première condition remplie.

8. Procédé (300) selon la revendication 7, la première durée maximale de chauffage étant déterminée d'après la première valeur de température de référence.

9. Procédé (100) selon la revendication 1 comportant en outre les étapes consistant à _{:}
• Déterminer une troisième valeur de température de référence représentant un effet de chauffage sur la température d'un troisième composant du véhicule électrique hybride,
• Étalonner un troisième température de préconditionnement en se basant sur l'effet de chauffage représenté par la troisième valeur de température de référence et en se basant également sur le niveau actuel de stockage d'énergie, la troisième température de préconditionnement après étalonnage étant telle qu'un véhicule électrique hybride comprenant un troisième composant présentant une température inférieure à la première température de préconditionnement puisse être exploité jusqu'à épuisement du moyen de stockage d'énergie sans que la température du premier composant s'élève au-dessus d'une troisième limite matérielle prédéfinie de température du fait dudit effet de chauffage représenté par la troisième valeur de température de référence,
• Mesurer une température actuelle du troisième composant,
• Demander un refroidissement du troisième composant suivant que la température actuelle du troisième composant est supérieure à la troisième température de préconditionnement étalonnée.

10. Unité (400) de régulation servant à réguler la température d'un premier composant d'un véhicule, l'unité (400) de régulation comportant des moyens (410) servant à déterminer une première valeur de température de référence représentant un développement de refroidissement sur la température du premier composant, et également des moyens (420) servant à déterminer un niveau actuel de stockage d'énergie d'un moyen de stockage d'énergie du véhicule, l'unité (400) de régulation étant agencée pour étalonner une première température de préconditionnement en se basant sur le développement de refroidissement représenté par la première valeur de température de référence et en se basant également sur le niveau actuel de stockage d'énergie, **caractérisée en ce que** la première température de préconditionnement après étalonnage est telle qu'un véhicule comprenant un premier composant présentant une température supérieure à la première température de préconditionnement puisse être exploité jusqu'à épuisement du moyen de stockage d'énergie sans que la température du premier composant tombe au-dessous d'une première limite matérielle prédéfinie de température du fait dudit développement de refroidissement représenté par la première valeur de température de référence, l'unité (400) de régulation comportant en outre des moyens (440) servant à mesurer une température actuelle du premier composant, l'unité (400) de régulation étant conçue pour demander un chauffage du premier composant suivant que la température actuelle du premier composant est inférieure à la première température de préconditionnement étalonnée.

11. Unité (400) de régulation selon la revendication 10, le véhicule étant un véhicule électrique hybride.

12. Unité (400) de régulation selon l'une quelconque des revendications 10 à 11, le premier composant étant soit une huile de moteur à combustion du véhicule, soit une huile de boîte de vitesses du véhicule.

13. Unité (400) de régulation selon l'une quelconque des revendications 10 à 12, les moyens (410) servant à déterminer une première valeur de température de référence comportant des moyens de mesure d'une température actuelle du premier composant, ainsi que des moyens de mesure d'une température ambiante externe du véhicule, et la première température de référence étant déterminée en sélectionnant la plus petite valeur parmi une température actuelle mesurée du premier composant et une température ambiante externe mesurée du véhicule.

14. Unité (400) de régulation selon l'une quelconque des revendications 10 à 13, ledit moyen de stockage d'énergie comportant un bloc de batteries électriques servant à stocker de l'énergie électrique, et ledit niveau actuel de stockage d'énergie correspondant à l'énergie électrique actuellement stockée par le moyen de stockage d'énergie.

15. Unité (400) de régulation selon l'une quelconque des revendications 10 à 14, l'étalonnage de la première température de préconditionnement en se basant sur le développement de refroidissement représenté par la première valeur de température de référence et en se basant également sur le niveau actuel de stockage d'énergie comportant la détermination de la première température de préconditionnement étalonnée au moyen d'une table de consultation numérique de températures de préconditionnement, la table de consultation numérique étant conçue pour être indexée par la première valeur de température de référence et le niveau actuel de stockage d'énergie.
